# EUROPEAN PATENT SPECIFICATION

(11) **EP 3 920 023 B1**
(45) Date of publication and mention of the grant of the patent: **19.02.2025**
(21) Application number: 20749488.1
(22) Date of filing: 13.01.2020
(51) Int. Cl.: G06F 3/0482, G06F 3/0486, G06F 3/04883, G06F 3/0483, G06V 40/16, G06V 40/12, G06V 40/13, G06V 40/70, G06F 21/62, G06F 9/451

(54) **INTERFACE DISPLAY METHOD AND TERMINAL**
SCHNITTSTELLENANZEIGEVERFAHREN UND ENDGERÄT
TERMINAL ET PROCÉDÉ D'AFFICHAGE D'INTERFACE

(30) Priority: 28.01.2019 CN 201910079459
(43) Date of publication of application: 08.12.2021
(73) Proprietor: VIVO MOBILE COMMUNICATION CO., LTD., Dongguan, Guangdong 523860 (CN)
(72) Inventor: LEI, Zezheng, Dongguan, Guangdong 523860 (CN)
(74) Representative: Deambrogi, Edgardo
(86) International application number: PCT/CN2020/071698
(87) International publication number: WO 2020/156111

(56) References cited:
- WO-A1-2018/133019
- CN-A- 105 389 372
- CN-A- 107 193 454
- CN-A- 107 193 454
- CN-A- 108 700 984
- CN-A- 109 814 972
- US-A1- 2017 010 901
- US-A1- 2018 253 717

## Description

### CROSS-REFERENCE TO RELATED APPLICATION

This application claims priority to Chinese Patent Application No. 201910079459.8 filed in china on January 28, 2019.

### TECHNICAL FIELD

The present disclosure relates to the technical field of communication, and in particular, to an interface display method and a terminal.

### BACKGROUND

With the continuous development of the terminal technology, users pay more and more attention to the use experience and convenient operation of the terminal. In order to improve the information acquisition efficiency, research and development personnel put forward the concept of intensively displaying messages of each application program in a certain page. Taking the negative one screen as an example, users can view the latest status of a plurality of applications in the negative one screen page without entering the applications, which is very convenient and quick. The negative one screen refers to the interface which includes a plurality of functional cards on the desktop of the terminal. Each function card may be a quick display page such as application suggestion, schedule, weather, calendar, reminder or application component. Furthermore, the negative one screen is usually arranged on the leftmost side of the desktop.

At present, the negative one screens are used more and more frequently in terminals, and many applications also support display in the negative one screen page. The functional cards are usually displayed in the negative one screen page according to a preset order. With the increasing number of the functional cards in the negative one screen page, users often need to look down for a long distance to find the desired functional card. In addition, information containing user privacy (such as express information, address book information and the like) displayed on some functional cards is liable to cause the leakage of the user privacy.

It can be seen that the terminal in related art has the problem that the display effect is poor because the page display mode is fixed. US20180253717A1 discloses a terminal apparatus and a control method. The terminal apparatus includes a sensing unit for sensing a predetermined input signal; a display unit for displaying a content and receiving an input of a touch gesture; and a control unit for activating a general payment mode when the predetermined input signal is not sensed and an input of a payment application execution command is received, and activating a secret payment mode when the predetermined input signal is sensed. CN201780014339 discloses a method for interaction. At least one card is presented in a UI of a launcher, each of the at least one card comprises content related items associated with a category of the card. A page is presented in response to a user input indicating switching from presentation of a card to presentation of the page, the page comprises content related items associated with a category of the page, the card is of the same category as the page and comprises a subset of the content related items of the page. CN107193454A1 discloses a card information view method and a terminal. The method comprises the following steps of: receiving touch operation information on a touch screen, wherein the touch screen is provided with a plurality of touch areas; determining card information corresponding to a touch operation according to the touch area corresponding to the touch operation information, wherein different touch areas correspond to different card information; and displaying the card information corresponding to the touch operation information.

### SUMMARY

Embodiments of the present disclosure provide an interface display method and a terminal, so as to solve the problem of poor display effect caused by the fixed display mode of the terminal page in related art.

To solve the foregoing technical problem, the present disclosure is implemented as follows:

According to a first aspect, an embodiment of the present disclosure provides an interface display method, applied to a terminal, which is defined in claim 1.

According to a second aspect, an embodiment of this disclosure provides a terminal, which is defined in claim 8.

According to a third aspect, an embodiment of the present disclosure provides a computer readable storage medium, which is defined in claim 14.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF THE DRAWING

To describe the technical solutions in embodiments of the present disclosure more clearly, the following briefly describes the accompanying drawings required for describing the embodiments of the present disclosure.
FIG. 1 is a first flowchart of an interface display method according to an embodiment of the present disclosure;
Fig. 2a is a schematic diagram of executing a first input on a desktop according to an embodiment of the present disclosure;
FIG. 2b is a schematic diagram of unfoldably displaying functional cards in a negative one screen according to an embodiment of the present disclosure;
FIG. 2c is a schematic diagram of foldably displaying functional cards in a negative one screen according to an embodiment of the present disclosure;
FIG. 3 is a second flowchart of an interface display method according to an embodiment of the present disclosure;
FIG. 4 is a schematic diagram of displaying a functional card option and a functional card group option in a preset area according to an embodiment of the present disclosure;
FIG. 5 is a first structural schematic diagram of a terminal according to an embodiment of the present disclosure;
FIG. 6 is a first structural schematic diagram of a first display module of a terminal according to an embodiment of the present disclosure;
FIG. 7 is a second structural schematic diagram of a first display module of a terminal according to an embodiment of the present disclosure;
FIG. 8 is a third structural schematic diagram of a first display module of a terminal according to an embodiment of the present disclosure;
FIG. 9 is a fourth structural schematic diagram of a first display module of a terminal according to an embodiment of the present disclosure;
FIG. 10 is a second structural schematic diagram of a terminal according to an embodiment of the present disclosure; and
FIG. 11 is a schematic diagram of a hardware structure of a terminal according to an embodiment of the present disclosure.

### DETAILED DESCRIPTION OF EMBODIMENTS

The technical solutions in the embodiments of the present disclosure are described below clearly and completely with reference to the accompanying drawings in the embodiments of the present disclosure.

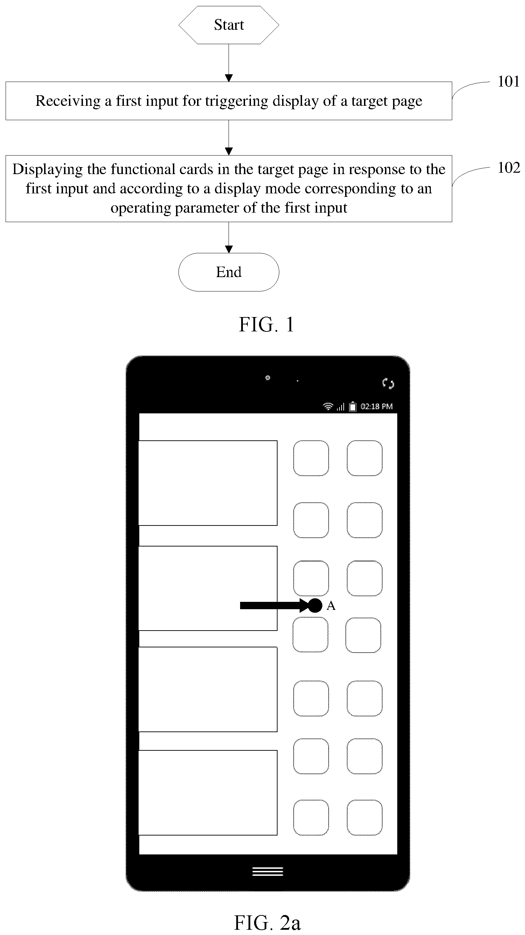

Referring to FIG. 1, FIG. 1 is a flowchart of an interface display method according to an embodiment of the present disclosure, applied to a terminal. As shown in FIG. 1, the method includes the following steps:

Step 101: receiving a first input for triggering display of a target page, where the target page includes at least two functional cards.

The target page may be page including at least two functional cards, where each functional card displays a notification message or quick function entry corresponding to an application program. For example, the target page may be a negative one screen page, where the negative one screen page refers to a page which is set on the left side of a main interface of a desktop of the terminal and configured to display functional cards such as application suggestion, schedule, weather, calendar, reminder or application component.

The first input may be a preset input for triggering display of a target page. For example, when the target page is a negative one screen page, the first input may be an input which slides rightwards on a first page of a main interface of a desktop to enter the negative one screen page, or may be an input which triggers the negative one screen page to display through specific sliding gesture input, pressing input, shortcut key touch and other ways.

In the step, when a user performs the first input for triggering display of the target page, a terminal may receive the first input.

Step 102: displaying, in response to the first input, the functional cards in the target page according to a display mode corresponding to an operating parameter of the first input.

After the first input is received, the functional cards in the target page are displayed according to the display mode corresponding to the operating parameter of the first input. Specifically, after the first input is received, the operating parameter of the first input is received, the display mode of the functional cards in the target page is determined based on the operating parameter of the first input, and finally, the functional cards in the target page are displayed according to the display mode, that is, the terminal may preset different operating parameters corresponding to different display modes, so that the user can determine the display the mode of the functional cards in the target page by controlling the operating parameter of the first input.

The operating parameter of the first input is related to an operating type of the first type. For example, when the first input is a sliding input, the operating parameter may be a sliding parameter or a fingerprint parameter; and when the first input is a pressing input, the operating parameter may be a pressing intensity or a pressing duration.

The functional cards in the target page are displayed in various different modes, a target functional card in the target page is preferentially displayed, the target functional card in the target page is unfoldably displayed, or the target functional card in the target page is foldably displayed.

In this embodiment, the specific display mode of the functional cards in the target page may be determined based on the operating parameter of the first input, so that the functional cards in the target page are displayed according to the determined display mode. For example, if the operating parameter of the first input is to slide toward a target functional card or a target functional card group in the target page, the target functional card or the target functional card group is preferentially displayed in the target page; and if the operating parameter of the first input is fingerprint information which is matched with preset fingerprint information, a functional card in a functional card list corresponding to the fingerprint information in the target page may be preferentially displayed.

After the display mode of the functional cards in the target page is determined, the functional cards in the target page are displayed according to the display mode, that is, the target page may be displayed and the functional cards in the target page are displayed according to the display mode.

For example, if the display mode is to preferentially display the target functional card in the target page, the target functional card may be displayed at the top of the target page, or it may be directly skipped to the position of the target functional card in the target page, so that a user does not need to slide down to find the target functional card, thereby saving user operation.

For another example, if the display mode is to set the display mode of some functional cards carrying privacy information into a folded display mode and the display mode of other functional cards without carrying privacy information as a normal unfolded display mode, the functional cards carrying the privacy information is foldably displayed in the target page, and the functional cards without carrying the privacy information is unfoldably displayed in the target page, thereby preventing leakage of user privacy.

Optionally, the operating parameter includes fingerprint information; and
the step 102 includes:
collecting the fingerprint information when a user performs the first input,
determining at least one functional card corresponding to preset fingerprint information in a case where the fingerprint information is matched with the preset fingerprint information, and
unfoldably displaying the at least one functional card in the target page.

In this implementation manner, the operating parameter may include fingerprint information. In this way, when the first input is received, the fingerprint information of a user may be collected. For example, when the input that a user slides rightwards on a first page of a main interface of a desktop is received, fingerprint information of the user at a sliding starting point, a sliding middle point or a sliding end point may be collected through a screen of a terminal, where the screen of the terminal may be a screen with an in-screen fingerprint identification function.

Then, the collected fingerprint information is matched with the preset fingerprint information to verify whether the fingerprint information is matched with the preset fingerprint information, where the preset fingerprint information may be fingerprint information which is entered by a user in advance. If it is determined that the fingerprint information is matched with the preset fingerprint information, at least one functional card corresponding to the fingerprint information may be determined first. Specifically, the functional card may be preset to require fingerprint verification to obtain a view permission, for example, some functional card sets containing privacy information, or a corresponding relationship between the fingerprint information and a functional card list is preset, so that in a case where the fingerprint information is matched with the preset fingerprint information, the corresponding functional card list may be determined.

The terminal may preset the display mode of the functional card corresponding to the preset fingerprint information when the fingerprint verification passes as an unfolded display mode, so that when the collected fingerprint information input by a user is matched with the preset fingerprint information, the at least one functional card may be directly unfoldably displayed, that is, it may be understood that when it is determined that the user has the permission to view the at least one functional card, the at least one functional card is unfoldably displayed, so that the user may visually view the content of the at least one functional card.

The terminal may also preset the display mode of the functional card corresponding to the preset fingerprint information as a folded display mode when the fingerprint verification does not pass, so that in a case where the fingerprint information is not matched with the preset fingerprint information, the at least one functional card may be foldably displayed, that is, when it is determined that a user does not have the permission to view the at least one functional card, the at least one functional card is foldably displayed, so as to prevent a non-terminal owner from viewing the content of the at least one functional card, thereby avoiding leakage of user privacy.

It should be noted that one or more fingerprint information may be entered in advance, and different finger information may be set to correspond to different functional cards. When the fingerprint information input by a user is matched with one of the fingerprint information entered in advanced, the functional card corresponding to the matched fingerprint information is unfoldably displayed, and the functional cards corresponding to other fingerprint information entered in advance are foldably displayed.

It should also be noted that in a case where the fingerprint information is not matched with the present fingerprint information, the display mode of the at least one functional card may be determined by further combining with face recognition, voiceprint recognition and other technologies in order to avoid the problem that a user cannot view some functional cards quickly due to inaccurate fingerprint verification. For example, in case of unsuccessful fingerprint information verification, a user is further subjected to face recognition by a camera. If recognition is successful, the at least one functional card is unfoldably displayed, so that the user can directly view the content of the at least one functional card without unfolding operation.

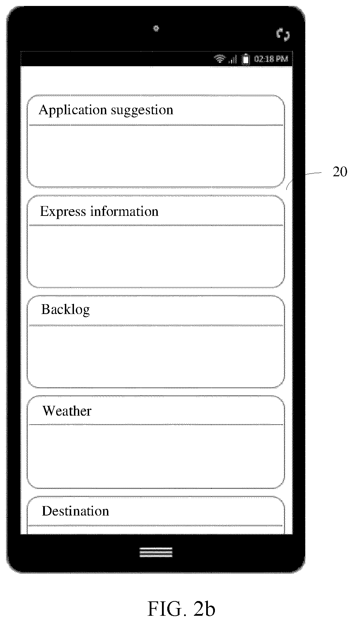

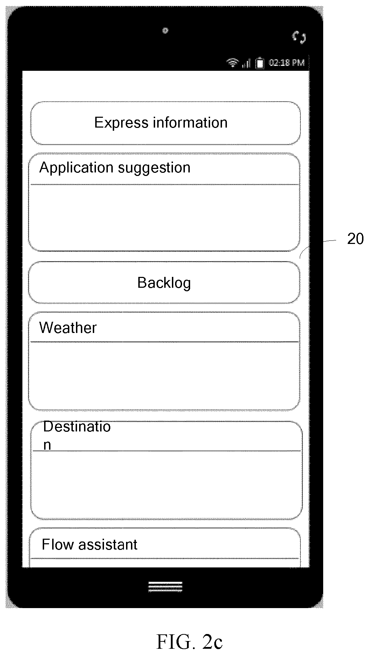

This implementation manner is described below with reference to FIG. 2 and by taking the display mode of the negative one screen page as an example.

As shown in FIG. 2a, when a user slides rightwards on the first page of the main interface of the desktop, the fingerprint information of the user may be collected at a sliding end point A and identification is performed on whether the fingerprint information of the user is matched with the preset fingerprint information; if the fingerprint information of the user is matched with the preset fingerprint information, a functional card list corresponding to the preset fingerprint information may be obtained, and the status of the functional card list and other functional cards that do not require fingerprint verification may be marked as an "accessible" status; and then as shown in FIG. 2b, enter a negative one screen page 20, and the functional cards in the functional card list and other functional cards that do not required fingerprint verification are unfoldably displayed.

If the fingerprint information of the user is not matched with the preset fingerprint information, the status of the functional card list may be marked as an "inaccessible" status, and the status of other functional cards that do not require fingerprint verification may be marked as an "accessible" status; and then as shown in FIG. 2c, enter a negative one screen page 20, the functional cards, such as "express information", "backlog" and the like, in the functional card list are foldably displayed, and other functional cards that do not require fingerprint verification are unfoldably displayed, such as "weather", "Alipay", "flow assistant" and the like.

In this way, when a user performs the first input to enter the target page, the display mode of the functional cards in the target page are determined by verifying the fingerprint information of the user, so that the display mode of some functional cards (such as the functional cards containing privacy information) in the target page may be set, thereby achieving the desired display effect of the user.

Optionally, the operating parameter includes an operating area; and
the step 102 includes:
determining a functional card or a functional card group corresponding to the operating area based on the operating area of the first input, and
preferentially displaying the functional card or the functional card group corresponding to the operating area in the target page.

In this implementation manner, the operating parameter may include an operating area, and specifically, may be an area operated by a user when the user performs the first input on the screen of the terminal. For example, when a user slides rightwards on the first page of the main interface of the desktop, the sliding area of the sliding input is the operating area of the first input.

The terminal may divide the screen into a plurality of different areas in advance, for example, divide the screen into three areas from top to bottom, and may preset each area to corresponding different functional cards or functional card groups respectively, where the functional card groups may be a combination including a plurality of functional cards. In this way, when the first input is received, the functional card or the functional card group corresponding to the operating area may be determined based on the operating area of the first input, and the functional card or the functional card group corresponding to the operating area is determined as a preferentially displayed content, so that when entering the target page, the functional card or the functional card in the functional card group corresponding to the operating area may be preferentially displayed.

In this way, in this implementation manner, the display mode of the functional card or the functional card group corresponding to the operating area is determined based on the operating area of the first input, so that the display mode of the functional card in the target page is more flexible, and a user may control the display mode of the functional card desired to be displayed by controlling the operating area of the first input.

In the embodiments of the present disclosure, the above terminal is any device with a storage medium, for example: computer (Computer), mobile phone, tablet personal computer (Tablet Personal Computer), laptop computer (Laptop Computer), personal digital assistant (personal digital assistant, PDA), mobile Internet device (Mobile Internet Device, MID) or wearable device (Wearable Device) and other terminal devices.

According to the interface display method in this embodiment, when receiving the first input for triggering display of the target page, the terminal displays the functional cards in the target page according to the display mode corresponding to the operating parameter of the first input, so that a user flexibly controls the display mode of the functional cards in the target page by controlling the operating parameter of the first input to achieve the desired display effect.

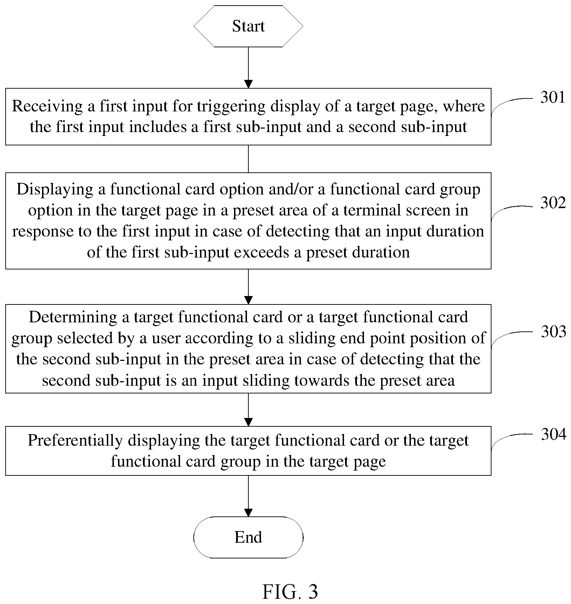

Referring to FIG. 3, FIG. 3 is a flowchart of another interface display method according to an embodiment of the present disclosure, applied to a terminal. On the basis of the embodiment shown in FIG. 1, this embodiment limits that the first input includes a first sub-input and a second sub-input and refines the step of displaying the functional cards in the target page according to the display mode corresponding to the operating parameter of the first input, so that the mode of how to display the functional cards in the target page becomes clearer and more specific. As shown in FIG. 3, the method includes the following steps:

Step 301: receiving a first input for triggering display of a target page, where the target page includes at least two functional cards, and the first input includes a first sub-input and a second sub-input.

Step 302: displaying a functional card option and/or a functional card group option in the target page in a preset area of a terminal screen in response to the first input in case of detecting that an input duration of the first sub-input exceeds a preset duration.

In this embodiment, the first input may include a first sub-input and a second sub-input. When the target page is a negative one screen page, the first input may be a sliding input on a desktop of the terminal, for example, a rightward sliding input on a first page of a main interface of the desktop of the terminal.

The detecting that the input duration of the first sub-input exceeds the preset duration may be detecting that the stay duration of the first sub-input on the terminal screen exceeds the preset duration, for example, the pressing duration exceeds the preset duration or the sliding duration exceeds the preset duration. When the target page is the negative one screen page, it may be that a user stays for more than a preset duration in the process of executing the sliding input to drag out the negative one screen page. Usually, the user directly drags out the negative one screen page through quick sliding input; however, in this embodiment, for user's convenience to select the target functional card or target functional card group desired to be preferentially displayed by the sliding input, the user may stay for the preset duration when executing the sliding input, so that the terminal displays the functional card option and/or the functional card group option in the negative cone screen page in a preset area of the desktop.

The preset area may be a preset area for displaying the functional card option and/or the functional card group option in the target page, where each functional card option corresponds to one functional card, and each functional card group option corresponds to a combination of one functional card, for example, the preset area may be a right area on the terminal screen, such as a right half area, a right third area and the like.

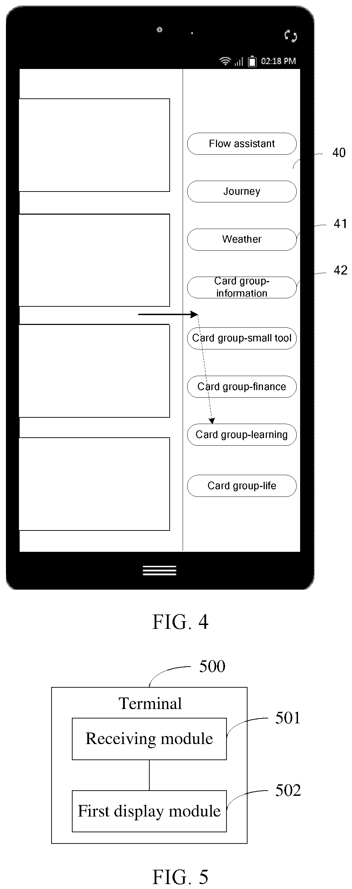

For example, as shown in FIG. 4, a functional card option 41 and/or a functional card group option 42 in the target page is displayed in a preset area 40 of the desktop in case of detecting that an input duration of the first sub-input exceeds a preset duration.

Step 303: determining a target functional card or a target functional card group selected by a user based on a sliding end point position of the second sub-input in the preset area in case of detecting that the second sub-input is an input sliding towards the preset area.

The detecting that the second sub-input is the input sliding towards the preset area may be an input that a user continues to slide towards the preset area to select the functional card or the functional card group desired to view after displaying the functional card option and/or the functional card group option in the target page in the preset area. Specifically, it may be that the functional card option or the functional card group option indicated by the sliding end point is determined based on the sliding end point position of the second sub-input in the preset area, thereby determining the target functional card or the target functional card group selected by the user.

For example, as shown in FIG. 4, when a user continues to slide towards the preset area 40 and the sliding end point points to a "card group_learning" option, it may be determined that the target functional card group selected by the user is "card group_learning".

Step 304: preferentially displaying the target functional card or the target functional card group in the target page.

After the target functional card or the target functional card group selected by the user is determined, the target functional card or the target functional card group may be determined as the preferentially displayed content, and the target functional card or the target functional card group in the target page is preferentially displayed after entering the target page.

That the target functional card or the target functional card group in the target page is preferentially displayed may be that the target functional card or the target functional card group is displayed at the top of the target page, or may be that in the target page, it is skipped to a position where the target functional card or the target functional card group is located to display.

For example, the target functional card or the functional card in the target functional card group is displayed at the top of the target page, so that the first functional card in the target page is the target functional card or the functional card in the target functional card group. When too many functional cards are displayed in the target page, a user does not need to slide down for a long distance to find the target functional card or the target functional card group, but can directly view the content of the target functional card or the functional cards in the target functional card group when entering the target page.

That in the target page, it is skipped to a position where the target functional card or the target functional card group is located to display may be to directly skip to the position of the target functional card or the target functional card group instead of displaying the first few functional cards in the target page by default, thereby saving the step that a user slides down to the position of the target functional card or the target functional card group.

In this way, the target functional card or the target functional card group selected by a user may be preferentially displayed by displaying the target functional card or the target functional card group at the top of the target page; or skipping to the position of the target functional card or the target functional card group in the target page to display, and operation of the user can be saved, so that it is convenient for the user to quickly view the message desired to view in the target page.

It should be noted that if it is detected that the input duration of the first sub-input does not exceed the preset duration or it is detected that the second sub-input is not the input sliding towards the preset area, the target page may be directly entered, and the functional card in the target page is displayed according to the default display mode.

Optionally, after Step 305, the method further includes:
displaying a corresponding application mark on at least one functional card in the target page; and
displaying a quick application interface corresponding to a first functional card if a touch operation aiming at the application mark on the first functional card is detected, where the quick application interface is an interface for displaying detailed contents corresponding to the functional cards without starting an application program, and the first functional card is any one of the at least one functional card.

In this implementation manner, corresponding application marks may also be displayed on at least one functional card in the target page respectively. Specifically, a corresponding application mark may be displayed on some commonly used functional cards in the target page, and a corresponding application mark may also be displayed on each functional card in the target page, where the application mark may be a virtual key or a virtual control for triggering display of a quick application interface corresponding to the functional card where the application mark is located.

Therefore, when a touch operation aiming at an application mark on a first functional card is detected, a quick application interface corresponding to the first functional card may be displayed, where the first functional card is any one of the at least one functional card, and the quick application interface may be an interface which may display the detailed content corresponding to the functional card without starting an application program, such as a fast application interface. In this way, a user may make the terminal display the corresponding quick application interface by touching the application mark on a certain functional card, so as to view more content of the application program corresponding to the functional card through the quick application interface without starting the application program, and thus it is convenient for the user to view application messages and the running memory of the system can be saved.

Of course, this implementation manner may also be applied to the embodiment shown in FIG. 1, and the same beneficial effect can be achieved.

In this embodiment, a user may trigger the preset area to display the functional card option and/or the functional card group option in the target page by executing the first sub-input meeting the condition, and may select the target functional card or the target functional card group desired to view by executing the second sub-input to control the target functional card or the target functional card group to be preferentially displayed in the target page, so that the sliding and finding operations of the user in the target page can be saved.

In addition, according to this embodiment, various optional implementation manners are increased on the basis of the embodiment shown in FIG. 1. These optional implementation manners may be realized in combination with each other or may be realized independently, and the display mode of the functional cards in the target page can be flexibly controlled, thereby achieving the technical effect of the desired display effect of a user.

Referring to FIG. 5, FIG. 5 is a structural schematic diagram of a terminal according to an embodiment of the present disclosure. As shown in FIG. 5, the terminal 500 includes:
a receiving module 501, configured to receive a first input for triggering display of a target page, where the target page includes at least two functional cards; and
a first display module 502, configured to display, in response to the first input, the functional cards in the target page according to a display mode corresponding to an operating parameter of the first input.

Optionally, the first input includes a first sub-input and a second sub-input.

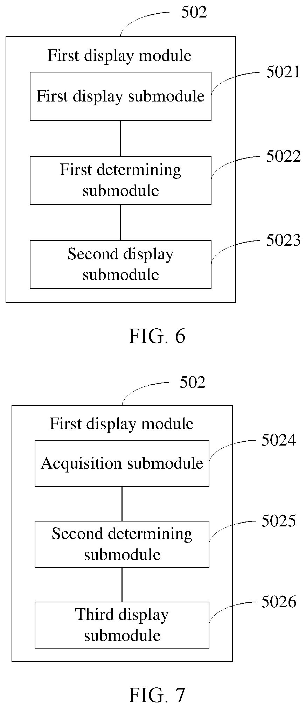

As shown in FIG. 6, the first display module 502 includes:
a first display submodule 5021, configured to display a functional card option and/or a functional card group option in the target page in a preset area of a terminal screen in a case where detecting that an input duration of the first sub-input exceeds a preset duration; or
a first determining submodule 5022, configured to determine a target functional card or a target functional card group selected by a user according to a sliding end point position of the second sub-input in the preset area in a case where detecting that the second sub-input is an input sliding towards the preset area; and
a second display submodule 5023, configured to preferentially display the target functional card or the target functional card group in the target page.

Optionally, the second display submodule 5023 is configured to display the target functional card or the target functional card group at the top of the target page; or
the second display submodule 5023 is configured to, skip to a position where the target functional card or the target functional card group is located in the target page to display.

Optionally, the operating parameter includes fingerprint information.

As shown in FIG. 7, the first display module 502 includes:
an acquisition submodule 5024, configured to collect the fingerprint information when a user performs the first input;
a second determining submodule 5025, configured to determine at least one functional card corresponding to preset fingerprint information in a case where the fingerprint information is matched with the preset fingerprint information; and
a third display submodule 5026, configured to unfoldably display the at least one functional card in the target page.

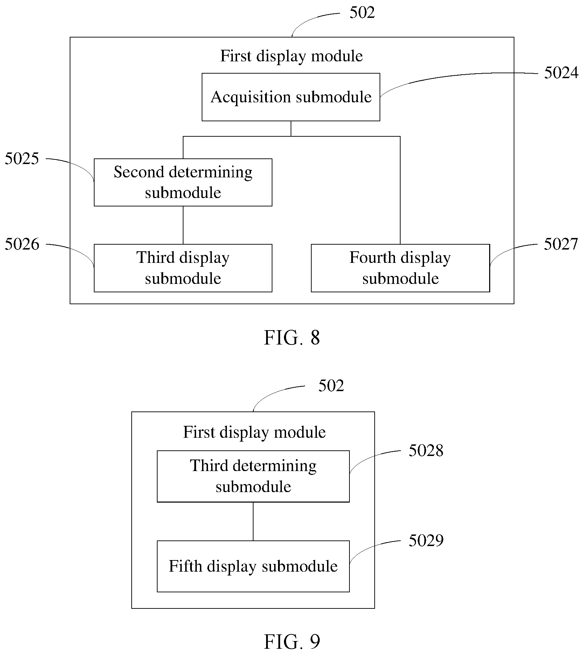

Optionally, as shown in FIG. 8, the first display module 502 further includes:
a fourth display submodule 5027, configured to foldably display the at least one functional card in the target page in a case where the fingerprint information is not matched with the preset fingerprint information.

Optionally, the operating parameter includes an operating area.

As shown in FIG. 9, the first display module 502 includes:
a third determining submodule 5028, configured to determine a functional card or a functional card group corresponding to the operating area according to the operating area of the first input; and
a fifth display submodule 5029, configured to preferentially display the functional card or the functional card group corresponding to the operating area in the target page.

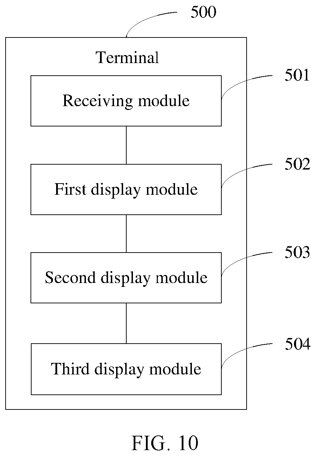

Optionally, as shown in FIG. 10, the terminal 500 further includes:
a second display module 503, configured to display a corresponding application mark on at least one functional card in the target page; and
a third display module 504, configured to display a quick application interface corresponding to a first functional card if a touch operation aiming at the application mark on the first functional card is detected, where the quick application interface is an interface for displaying detailed contents corresponding to the functional cards without starting an application program, and the first functional card is any one of the at least one functional card.

The terminal 500 can implement the processes implemented by the terminal in the method embodiments of FIG. 1 and FIG. 3. To avoid repetition, details are not described herein again. In the embodiments of the present disclosure, the terminal 500 may display the functional cards in the target page according to the display mode corresponding to the operating parameter of the first input when receiving the first input for triggering display of the target page, so that a user may flexibly control the display mode of the functional cards in the target page by controlling the operating parameter of the first input, thereby achieving the desired display effect.

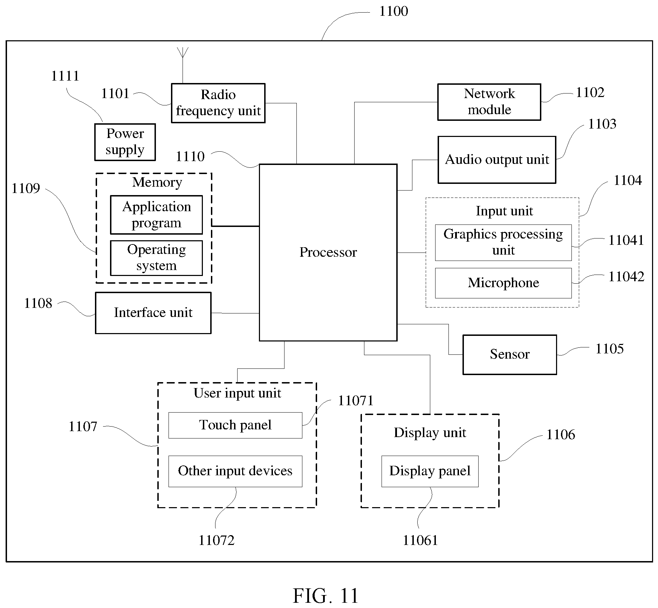

FIG. 11 is a schematic structural diagram of hardware of a terminal implementing embodiments of the present disclosure. The terminal 1100 includes but is not limited to: a radio frequency unit 1101, a network module 1102, an audio output unit 1103, an input unit 1104, a sensor 1105, a display unit 1106, a user input unit 1107, an interface unit 1108, a memory 1109, a processor 1110, a power supply 1111, and other components. Those skilled in the art may understand that the terminal structure shown in FIG. 11 does not constitute a limitation to the terminal. The terminal may include more or fewer components than those shown in the figure, or some components may be combined, or there may be a different component arrangement. In the embodiments of the present disclosure, the terminal includes but is not limited to a mobile phone, a tablet personal computer, a notebook computer, a palmtop computer, a vehicle-mounted terminal, a wearable device, and a pedometer.

The processor 1110 is configured to: control a user input unit 1107 to receive the first input for triggering display of the target page, where the target page includes at least two functional cards, and
control a display unit 1106 to display the functional cards in the target page according to the display mode corresponding to the operating parameter of the first input in response to the first input.

Optionally, the first input includes a first sub-input and a second sub-input.

The processor 1110 is further configured to:
control the display unit 1106 to display the functional card option and/or the functional card group option in the target page in the preset area of the desktop in case of detecting that the input duration of the first sub-input exceeds a preset duration,
determine a target functional card or a target functional card group selected by a user according to a sliding end point position of the second sub-input in the preset area in case of detecting that the second sub-input is an input sliding towards the preset area, and
control the display unit 1106 to preferentially display the target functional card or the target functional card group in the target page.

Optionally, the processor 1110 is further configured to:
control the display unit 1106 to display the target functional card or the target functional card group at the top of the target page, or
control the display unit 1106 to, skip to the position of the target functional card or the target functional card group in the target page to display.

Optionally, the operating parameter includes fingerprint information.

The processor 1110 is further configured to:
control the user input unit 1107 to collect fingerprint information when the user performs the first input,
determine at least one functional card corresponding to preset fingerprint information in a case where the fingerprint information is matched with the preset fingerprint information, and
control the display unit 1106 to unfoldably display the at least one functional card in the target page.

Optionally, the processor 1110 is further configured to:
control the display unit 1106 to foldably display the at least one functional card in the target page in a case where the fingerprint information is not matched with the preset fingerprint information.

Optionally, the operating parameter includes an operating area.

The processor 1110 is further configured to:
determine a functional card or a functional card group corresponding to the operating area according to the operating area of the first input, and
control the display unit 1106 to preferentially display the functional card or the functional card group corresponding to the operating area in the target page.

Optionally, the processor 1110 is further configured to:
control the display unit 1106 to display a corresponding application mark on at least one functional card in the target page, and
control the display unit 1106 to display a quick application interface corresponding to a first functional card if a touch operation aiming at the application mark on the first functional card is detected, where the quick application interface is an interface for displaying detailed contents corresponding to the functional cards without starting an application program, and the first functional card is any one of the at least one functional card.

The terminal 1100 can implement the processes implemented by the terminal in the foregoing embodiments. To avoid repetition, details are not described herein again. In the embodiments of the present disclosure, the terminal 1100 may display the functional cards in the target page according to the display mode corresponding to the operating parameter of the first input when receiving the first input for triggering display of the target page, so that a user may flexibly control the display mode of the functional cards in the target page by controlling the operating parameter of the first input, thereby achieving the desired display effect.

It should be understood that, in this embodiment of the present disclosure, the radio frequency unit 1101 may be configured to receive and send information or a signal in a call process. Specifically, after receiving downlink data from a base station, the radio frequency unit 1101 sends the downlink data to the processor 1110 for processing. In addition, the radio frequency unit 1101 sends uplink data to the base station. Usually, the radio frequency unit 1101 includes but is not limited to an antenna, at least one amplifier, a transceiver, a coupler, a low noise amplifier, a duplexer, and the like. In addition, the radio frequency unit 1101 may further communicate with other devices by using a wireless communications system and network.

The terminal provides wireless broadband Internet access for a user by using the network module 1102, for example, helping the user to receive and send an email, browse a web page, and access streaming media.

The audio output unit 1103 may convert audio data received by the radio frequency unit 1101 or the network module 1102 or stored in the memory 1109 into an audio signal and output the audio signal as a sound. In addition, the audio output unit 1103 may further provide audio output (for example, a call signal received voice, or a message received voice) related to a specific function performed by the terminal 1100. The audio output unit 1103 includes a loudspeaker, a buzzer, a receiver, and the like.

The input unit 1104 is configured to receive audio or video signals. The input unit 1104 may include a graphics processing unit (Graphics Processing Unit, GPU) 11041 and a microphone 11042. The graphics processing unit 11041 processes image data of a static image or video obtained by an image capture apparatus (such as, a camera) in a video capture mode or an image capture mode. A processed image frame may be displayed on the display unit 1106. The image frame processed by the graphics processing unit 11041 may be stored in the memory 1109 (or other storage mediums) or sent by using the radio frequency unit 1101 or the network module 1102. The microphone 11042 may receive sound and can process such sound into audio data. The processed audio data may be converted, in a call mode, into a format that can be sent by the radio frequency unit 1101 to a mobile communication base station for output.

The terminal 1100 further includes at least one sensor 1105, such as an optical sensor, a motion sensor, and another sensor. Specifically, the optical sensor includes an ambient light sensor and a proximity sensor. The ambient light sensor may adjust luminance of the display panel 11061 based on brightness of ambient light, and the proximity sensor may disable the display panel 11061 and/or backlight when the terminal 1100 approaches an ear. As a type of motion sensor, an accelerometer sensor may detect an acceleration value in each direction (generally, three axes), and detect a value and a direction of gravity when the accelerometer sensor is static, and may be configured to recognize a terminal posture (such as switching between landscape and portrait modes, a related game, or magnetometer posture calibration), and perform a function related to vibration recognition (such as a pedometer or a knock), and the like. The sensor 1105 may further include a fingerprint sensor, a pressure sensor, an iris sensor, a molecular sensor, a gyroscope, a barometer, a hygrometer, a thermometer, an infrared sensor, and the like. Details are not described herein again.

The display unit 1106 is configured to display information entered by a user or information provided for the user. The display unit 1106 may include the display panel 11061, and the display panel 11061 may be configured in a form of a liquid crystal display (Liquid Crystal Display, LCD), an organic light-emitting diode (Organic Light-Emitting Diode, OLED), or the like.

A user input unit 1107 may be configured to receive input digital or character information, and generate key signal input related to user setting and function control of a terminal. Specifically, the user input unit 1107 includes a touch panel 11071 and another input device 11072. The touch panel 11071, also called a touch screen, may collect touch operation on or near the touch panel by users (for example, operation on the touch panel 11071 or near the touch panel 11071 by fingers or any suitable objects or accessories such as a touch pen by the users). The touch panel 11071 may include two parts: a touch detection device and a touch controller. The touch detection device detects a touch position of the user, detects a signal brought by the touch operation, and sends the signal to the touch controller. The touch controller receives touch information from the touch detection device, converts the touch information into touch point coordinates, sends the touch point coordinates to the processor 1110, and receives and executes a command sent by the processor 1110. In addition, the touch panel 11071 may be implemented by using a plurality of types such as a resistive type, a capacitive type, an infrared ray type, and a surface acoustic wave type. The user input unit 1107 may further include another input device 11072 in addition to the touch panel 11071. Specifically, the another input device 11072 may include, but is not limited to, a physical keyboard, function keys (such as a volume control key and a switch key), a trackball, a mouse, and a joystick. Details are not described herein.

Further, the touch panel 11071 may cover the display panel 11061. When detecting a touch operation on or near the touch panel 11071, the touch panel 11071 transmits the touch operation to the processor 1110 to determine a type of a touch event. Then the processor 1110 provides corresponding visual output on the display panel 11061 based on the type of the touch event. In FIG. 11, the touch panel 11071 and the display panel 11061 are used as two independent components to implement input and output functions of the terminal. However, in some embodiments, the touch panel 11071 and the display panel 11061 may be integrated to implement the input and output functions of the terminal. This is not specifically limited herein.

The interface unit 1108 is an interface connecting an external apparatus to the terminal 1100. For example, the external apparatus may include a wired or wireless headset port, an external power supply (or a battery charger) port, a wired or wireless data port, a memory card port, a port for connecting an apparatus having an identification module, an audio input/output (I/O) port, a video I/O port, a headset port, and the like. The interface unit 1108 may be configured to receive an input (for example, data information and power) from an external apparatus and transmit the received input to one or more elements within the terminal 1100, or may be configured to transmit data between the terminal 1100 and the external apparatus.

The memory 1109 may be configured to store a software program and various data. The memory 1109 may mainly include a program storage area and a data storage area. The program storage area may store an operating system, an application required by at least one function (for example, an audio playing function and an image playing function), and the like. The data storage area may store data (for example, audio data and an address book) created according to use of the mobile phone. In addition, the memory 1109 may include a high-speed random access memory, or may include a nonvolatile memory, for example, at least one disk storage device, a flash memory, or another volatile solid-state storage device.

The processor 1110 is a control center of the terminal, and connects all parts of the entire terminal by using various interfaces and lines. By running or executing a software program and/or a module stored in the memory 1109 and invoking data stored in the memory 1109, the processor performs various functions of the terminal and data processing, to perform overall monitoring on the terminal. The processor 1110 may include one or more processing units. Optionally, the processor 1110 may be integrated with an application processor and a modem processor. The application processor mainly processes an operating system, a user interface, an application program, and the like, and the modem processor mainly processes wireless communication. It may be understood that the modem processor may also not be integrated into the processor 1110.

The terminal 1100 may further include a power supply 1111 (for example, a battery) that supplies power to various components. Optionally, the power supply 1111 may be logically connected to the processor 1110 through a power supply management system, to perform functions of managing charging, discharging, and power consumption through the power supply management system.

In addition, the terminal 1100 includes some function modules not shown, and details are not described herein.

Optionally, an embodiment of the present disclosure further provides a terminal, including a processor 1110, a memory 1109, and a computer program that is stored in the memory 1109 and that can run on the processor 1110. When the computer program is executed by the processor 1110, the processes of embodiments of the interface display method can be implemented, and the same technical effect can be achieved. To avoid repetition, details are not described herein again.

The embodiments of the present disclosure further provide a computer readable storage medium. The computer readable storage medium stores a computer program, where when the computer program is executed by a processor, the processes of the embodiments of the above interface display method are implemented, and the same technical effect can be achieved. To avoid repetition, details are not described herein again. The computer-readable storage medium is, for example, a read-only memory (Read-Only Memory, ROM), a random access memory (Random Access Memory, RAM), a magnetic disk, or an optical disc.

It should be noted that in this specification, the terms "comprise", "include" and any other variants thereof are intended to cover non-exclusive inclusion, so that a process, a method, an article, or a device that includes a series of elements not only includes those elements, but may further include other elements not expressly listed, or further include elements inherent to this process, method, article, or device. An element limited by "includes a ..." does not, without more constraints, preclude the presence of additional identical elements in the process, method, article, or device that includes the element.

Based on the foregoing descriptions of the embodiments, a person skilled in the art may clearly understand that the method in the foregoing embodiment may be implemented by software in addition to a necessary universal hardware platform or by hardware only. In most circumstances, the former is a more optional implementation manner. Based on such an understanding, the technical solutions of the present disclosure essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of the present disclosure.

## Claims

1. An interface display method, performed by a terminal, **characterized by** comprising:
receiving (101) a first input for triggering display of a target page, wherein the target page comprises at least two functional cards, and each functional card displays a notification message or quick function entry corresponding to an application program; and
displaying (102), in response to the first input, functional cards in the target page according to a display mode corresponding to an operating parameter of the first input, wherein the operating parameter of the first input is related to an operating type of the first input, different operating parameters correspond to different display modes, and the display mode comprises at least one of:
displaying at least one functional card in the target page:
unfoldably displaying the at least one functional card in the target page, so that content of the at least one functional card can be directly viewed without an unfolding operation;
foldably displaying the at least one functional card in the target page, so as not to display content of the at least one functional card.

2. The method according to claim 1, wherein the first input comprises a first sub-input and a second sub-input; and
the displaying (102) the functional cards in the target page according to the display mode corresponding to the operating parameter of the first input comprises:
displaying (302) a functional card option (41) and/or a functional card group option (42) in the target page (40) in a preset area of a terminal screen, in a case where detecting that an input duration of the first sub-input more than a preset duration, or
determining (303) a target functional card or a target functional card group selected by a user according to a sliding end point position of the second sub-input in the preset area, in a case where detecting that the second sub-input is an input sliding towards the preset area, and
preferentially displaying (304) the target functional card or the target functional card group in the target page.

3. The method according to claim 2, wherein the preferentially displaying the target functional card or the target functional card group in the target page comprises:
displaying the target functional card or the target functional card group at the top of the target page; or
skipping to a position where the target functional card or the target functional card group is located in the target page to display.

4. The method according to claim 1, wherein the operating parameter comprises fingerprint information; and
the displaying (102) the functional cards in the target page according to the display mode corresponding to the operating parameter of the first input comprises:
collecting the fingerprint information when a user performs the first input,
determining at least one functional card corresponding to preset fingerprint information in a case where the fingerprint information is matched with the preset fingerprint information, and
unfoldably displaying the at least one functional card in the target page.

5. The method according to claim 4, wherein after collecting the fingerprint information when the user performs the first input, the method further comprises:
foldably displaying the at least one functional card in the target page in a case where the fingerprint information is not matched with the preset fingerprint information.

6. The method according to claim 1, wherein the operating parameter comprises an operating area; and
the displaying (102) the functional cards in the target page according to the display mode corresponding to the operating parameter of the first input comprises:
determining a functional card or a functional card group corresponding to the operating area according to the operating area of the first input, and
preferentially displaying the functional card or the functional card group corresponding to the operating area in the target page.

7. The method according to any one of claims 1 to 6, wherein after displaying (102) the functional card in the target page according to the display mode corresponding to the operating parameter of the first input, the method further comprises:
displaying a corresponding application mark on at least one functional card in the target page; and
displaying a quick application interface corresponding to a first functional card if detecting a touch operation aiming at the application mark on the first functional card, wherein the quick application interface is an interface for displaying detailed contents corresponding to the functional cards without starting an application program, and the first functional card is any one of the at least one functional card.

8. A terminal (500), **characterized by** comprising:
a receiving module (501), configured to receive a first input for triggering display of a target page, wherein the target page comprises at least two functional cards, and each functional card displays a notification message or quick function entry corresponding to an application program; and
a first display module (502), configured to display, in response to the first input, the functional cards in the target page according to a display mode corresponding to an operating parameter of the first input, wherein the operating parameter of the first input is related to an operating type of the first input, different operating parameters correspond to different display modes, and the display mode comprises at least one of:
displaying at least one functional card in the target page:
unfoldably displaying the at least one functional card in the target page, so that content of the at least one functional card can be directly viewed without an unfolding operation;
foldably displaying the at least one functional card in the target page, so as not to display content of the at least one functional card.

9. The terminal (500) according to claim 8, wherein the first input comprises a first sub-input and a second sub-input; and
the first display module (502) comprises:
a first display submodule (5021), configured to display a functional card option (41) and/or a functional card group option (42) in the target page in a preset area (40) of a terminal screen in a case where detecting that an input duration of the first sub-input exceeds a preset duration,
a first determining submodule (5022), configured to determine a target functional card or a target functional card group selected by a user according to a sliding end point position of the second sub-input in the preset area in a case where detecting that the second sub-input is an input sliding towards the preset area, and
a second display submodule (5023), configured to preferentially display the target functional card or the target functional card group in the target page; or
the operating parameter comprises fingerprint information; and the first display module (502) comprises:
an acquisition submodule (5024), configured to collect the fingerprint information when a user performs the first input,
a second determining submodule (5025), configured to determine at least one functional card corresponding to preset fingerprint information in a case where the fingerprint information is matched with the preset fingerprint information, and
a third display submodule (5026), configured to unfoldably display the at least one functional card in the target page.

10. The terminal according to claim 9, wherein the second display submodule (5023) is configured to display the target functional card or the target functional card group at the top of the target page; or
the second display submodule (5023) is configured to, skip to a position where the target functional card or the target functional card group is located in the target page to display.

11. The terminal (500) according to claim 9, wherein the first display module (502) further comprises:
a fourth display submodule (5027), configured to foldably display the at least one functional card in the target page in a case where the fingerprint information is not matched with the preset fingerprint information.

12. The terminal (500) according to claim 8, wherein the operating parameter comprises an operating area; and the first display module (502) comprises:
a third determining submodule (5028), configured to determine a functional card or a functional card group corresponding to the operating area according to the operating area of the first input, and
a fifth display submodule (5029), configured to preferentially display the functional card or the functional card group corresponding to the operating area in the target page.

13. The terminal (500) according to any one of claims 8 to 12, further comprising:
a second display module (503), configured to display a corresponding application mark on at least one functional card in the target page; and
a third display module (504), configured to display a quick application interface corresponding to a first functional card if a touch operation aiming at the application mark on the first functional card is detected, wherein the quick application interface is an interface for displaying detailed contents corresponding to the functional cards without starting an application program, and the first functional card is any one of the at least one functional card.

14. A computer readable storage medium, **characterized by** storing a computer program, wherein when the computer program is executed by a processor (1110), steps of the interface display method according to any one of claims 1 to 7 are implemented.

## Patentansprüche

1. Schnittstellenanzeigeverfahren, das von einem Endgerät durchgeführt wird, **dadurch gekennzeichnet, dass** es umfasst:
Empfangen (101) einer ersten Eingabe zum Auslösen der Anzeige einer Zielseite, wobei die Zielseite mindestens zwei Funktionskarten umfasst und wobei jede Funktionskarte eine Benachrichtigungsmeldung oder einen Schnellfunktionszugriff anzeigt, die einem Anwendungsprogramm entspricht; und
Anzeigen (102), in Reaktion auf die erste Eingabe, der Funktionskarten auf der Zielseite gemäß einem Anzeigemodus, der einem Betriebsparameter der ersten Eingabe entspricht, wobei der Betriebsparameter der ersten Eingabe mit einem Betriebstyp der ersten Eingabe verbunden ist, wobei verschiedene Betriebsparameter unterschiedlichen Anzeigemodi entsprechen, und wobei der Anzeigemodus mindestens einen der folgenden Vorgänge umfasst:
Anzeigen mindestens einer Funktionskarte auf der Zielseite;
aufklappbares Anzeigen der mindestens einen Funktionskarte auf der Zielseite, sodass der Inhalt der mindestens einen Funktionskarte direkt ohne einen Aufklappsvorgang angezeigt werden kann;
klappbares Anzeigen der mindestens einen Funktionskarte auf der Zielseite, um den Inhalt der mindestens einen Funktionskarte nicht anzuzeigen.

2. Verfahren nach Anspruch 1, wobei die erste Eingabe eine erste Subeingabe und eine zweite Subeingabe umfasst; und
das Anzeigen (102) der Funktionskarten auf der Zielseite gemäß dem Anzeigemodus, der dem Betriebsparameter der ersten Eingabe entspricht, umfasst:
Anzeigen (302) einer Funktionskartenoption (41) und/oder einer Funktionskartengruppenoption (42) auf der Zielseite (40) in einem voreingestellten Bereich eines Endgerätsbildschirms, falls man festgestellt wird, dass eine Eingabedauer der ersten Subeingabe eine voreingestellte Dauer überschreitet; oder
Bestimmen (303) einer Ziel-Funktionskarte oder einer Ziel-Funktionskartengruppe, die durch einen Benutzer gemäß einer Endpunktstellung der Verschiebung der zweiten Subeingabe im voreingestellten Bereich ausgewählt wird, falls man festgestellt wird, dass die zweite Subeingabe eine Verschiebung in Richtung des voreingestellten Bereichs ist; und
Anzeigen (304) vorzugsweise der Ziel-Funktionskarte oder der Ziel-Funktionskartengruppe auf der Zielseite.

3. Verfahren nach Anspruch 2, wobei das Anzeigen vorzugsweise der Ziel-Funktionskarte oder der Ziel-Funktionskartengruppe auf der Zielseite umfasst:
Anzeigen der Ziel-Funktionskarte oder der Ziel-Funktionskartengruppe auf der Oberseite der Zielseite; oder
Springen zu einer Position, in der sich die Ziel-Funktionskarte oder die Ziel-Funktionskartengruppe auf der anzuzeigenden Zielseite befindet.

4. Verfahren nach Anspruch 1, wobei der Betriebsparameter Fingerabdruckinformationen umfasst; und
das Anzeigen (102) der Funktionskarten auf der Zielseite gemäß dem Anzeigemodus, der dem Betriebsparameter der ersten Eingabe entspricht, umfasst:
Erfassen der Fingerabdruckinformationen, wenn ein Benutzer die erste Eingabe durchführt;
Bestimmen mindestens einer Funktionskarte, die den voreingestellten Fingerabdruckinformationen entspricht, falls die Fingerabdruckinformationen mit den voreingestellten Fingerabdruckinformationen übereinstimmen; und
aufklappbares Anzeigen der mindestens einen Funktionskarte auf der Zielseite.

5. Verfahren nach Anspruch 4, wobei nach dem Erfassen der Fingerabdruckinformationen, wenn der Benutzer die erste Eingabe durchführt, umfasst das Verfahren ferner:
klappbares Anzeigen der mindestens einen Funktionskarte auf der Zielseite, falls die Fingerabdruckinformationen nicht mit den voreingestellten Fingerabdruckinformationen übereinstimmen.

6. Verfahren nach Anspruch 1, wobei der Betriebsparameter einen Betriebsbereich umfasst; und
das Anzeigen (102) der Funktionskarten auf der Zielseite gemäß dem Anzeigemodus, der dem Betriebsparameter der ersten Eingabe entspricht, umfasst:
Bestimmen einer Funktionskarte oder einer Funktionskartengruppe, die dem Betriebsbereich entspricht, gemäß dem Betriebsbereich der ersten Eingabe; und
Anzeigen vorzugsweise der Funktionskarte oder der Funktionskartengruppe, die dem Betriebsbereich auf der Zielseite entspricht.

7. Verfahren nach einem der Ansprüche 1 bis 6, wobei nach dem Anzeigen (102) der Funktionskarte auf der Zielseite gemäß dem Anzeigemodus, der dem Betriebsparameter der ersten Eingabe entspricht, umfasst das Verfahren ferner:
Anzeigen einer entsprechenden Anwendungsmarke auf mindestens einer Funktionskarte auf der Zielseite; und
Anzeigen einer Schnellanwendungsschnittstelle, die einer ersten Funktionskarte entspricht, wenn ein Berührungsvorgang festgestellt wird, der auf die Anwendungsmarke auf der ersten Funktionskarte abzielt, wobei die Schnellanwendungsschnittstelle eine Schnittstelle zum Anzeigen detaillierter Inhalte ist, die den Funktionskarten entsprechen, ohne ein Anwendungsprogramm zu starten, und die erste Funktionskarte eine beliebige der mindestens einen Funktionskarten ist.

8. Endgerät (500), **dadurch gekennzeichnet, dass** es umfasst:
ein Empfangsmodul (501), das konfiguriert ist, eine erste Eingabe zum Auslösen der Anzeige einer Zielseite zu empfangen, wobei die Zielseite mindestens zwei Funktionskarten umfasst, und wobei jede Funktionskarte eine Benachrichtigungsmeldung oder einen Schnellfunktionszugriff anzeigt, die einem Anwendungsprogramm entspricht; und
ein erstes Anzeigemodul (502), das konfiguriert ist, in Reaktion auf die erste Eingabe, die Funktionskarten auf der Zielseite gemäß einem Anzeigemodus anzuzeigen, der einem Betriebsparameter der ersten Eingabe entspricht, wobei der Betriebsparameter der ersten Eingabe mit einem Betriebstyp der ersten Eingabe verbunden ist, wobei verschiedene Betriebsparameter unterschiedlichen Anzeigemodi entsprechen, und wobei der Anzeigemodus mindestens einen der folgenden Vorgänge umfasst:
Anzeigen mindestens einer Funktionskarte auf der Zielseite;
aufklappbares Anzeigen der mindestens einen Funktionskarte auf der Zielseite, sodass der Inhalt der mindestens einen Funktionskarte direkt ohne einen Aufklappsvorgang angezeigt werden kann;
klappbares Anzeigen der mindestens einen Funktionskarte auf der Zielseite, um den Inhalt der mindestens einen Funktionskarte nicht anzuzeigen.

9. Endgerät (500) nach Anspruch 8, wobei die erste Eingabe eine erste Subeingabe und eine zweite Subeingabe umfasst; und
das erste Anzeigemodul (502) umfasst:
ein erstes Anzeigesubmodul (5021), das konfiguriert ist, eine Funktionskartenoption (41) und/oder eine Funktionskartengruppenoption (42) auf der Zielseite in einem voreingestellten Bereich (40) eines Endgerätsbildschirms anzuzeigen, falls man festgestellt wird, dass eine Eingabedauer der ersten Subeingabe eine voreingestellte Dauer überschreitet;
ein erstes Bestimmungssubmodul (5022), das konfiguriert ist, einer Ziel-Funktionskarte oder einer Ziel-Funktionskartengruppe zu bestimmen, die durch einen Benutzer gemäß einer Endpunktstellung der Verschiebung der zweiten Subeingabe im voreingestellten Bereich ausgewählt wird, falls man festgestellt wird, dass die zweite Subeingabe eine Verschiebung in Richtung des voreingestellten Bereichs ist; und
ein zweites Anzeigesubmodul (5023), das konfiguriert ist, die Ziel-Funktionskarte oder die Ziel-Funktionskartengruppe auf der Zielseite vorzugsweise anzuzeigen; oder
der Betriebsparameter Fingerabdruckinformationen umfasst; und das erste Anzeigemodul (502) umfasst:
ein Erfassungssubmodul (5024), das konfiguriert ist, die Fingerabdruckinformationen zu erfassen, wenn ein Benutzer die erste Eingabe durchführt;
ein zweites Bestimmungssubmodul (5025), das konfiguriert ist, mindestens eine Funktionskarte, die den voreingestellten Fingerabdruckinformationen entspricht, zu bestimmen, falls die Fingerabdruckinformationen mit den voreingestellten Fingerabdruckinformationen übereinstimmen; und
ein drittes Anzeigesubmodul (5026), das konfiguriert ist, die mindestens einen Funktionskarte auf der Zielseite aufklappbar anzuzeigen .

10. Endgerät nach Anspruch 9, wobei das zweite Anzeigesubmodul (5023) konfiguriert ist, die Ziel-Funktionskarte oder die Ziel-Funktionskartengruppe auf der Oberseite der Zielseite anzuzeigen; oder
das zweite Anzeigesubmodul (5023) konfiguriert ist, zu einer Position zu springen, in der sich die Ziel-Funktionskarte oder die Ziel-Funktionskartengruppe auf der anzuzeigenden Zielseite befindet.

11. Endgerät (500) nach Anspruch 9, wobei das erste Anzeigemodul (502) ferner umfasst:
ein viertes Anzeigesubmodul (5027), das konfiguriert ist, mindestens eine Funktionskarte auf der Zielseite klappbar anzuzeigen, falls die Fingerabdruckinformationen nicht mit den voreingestellten Fingerabdruckinformationen übereinstimmen.

12. Endgerät (500) nach Anspruch 8, wobei der Betriebsparameter einen Betriebsbereich umfasst; und das erste Anzeigemodul (502) umfasst:
ein drittes Bestimmungssubmodul (5028), das konfiguriert ist, eine Funktionskarte oder eine Funktionskartengruppe, die dem Betriebsbereich entspricht, gemäß dem Betriebsbereich der ersten Eingabe zu bestimmen; und
ein fünftes Anzeigesubmodul (5029), das konfiguriert ist, die Funktionskarte oder die Funktionskartengruppe, die dem Betriebsbereich auf der Zielseite entspricht, vorzugsweise anzuzeigen.

13. Endgerät (500) nach einem der Ansprüche 8 bis 12, ferner umfassend:
ein zweites Anzeigemodul (503), das konfiguriert ist, eine entsprechende Anwendungsmarke auf mindestens einer Funktionskarte auf der Zielseite anzuzeigen; und
ein drittes Anzeigemodul (504), das konfiguriert ist, eine Schnellanwendungsschnittstelle, die einer ersten Funktionskarte entspricht, anzuzeigen, wenn ein Berührungsvorgang festgestellt wird, der auf die Anwendungsmarke auf der ersten Funktionskarte abzielt, wobei die Schnellanwendungsschnittstelle eine Schnittstelle zum Anzeigen detaillierter Inhalte ist, die den Funktionskarten entsprechen, ohne ein Anwendungsprogramm zu starten, und die erste Funktionskarte eine beliebige der mindestens einen Funktionskarten ist.

14. Computerlesbares Speichermedium, **gekennzeichnet durch** das Speichern eines Computerprogramms, wobei wenn das Computerprogramms durch einen Prozessor (1110) durchgeführt wird, Schritte des Schnittstellenanzeigeverfahrens gemäß einem der Ansprüche 1 bis 7 implementiert werden.

## Revendications

1. Un procédé d'affichage d'interface, exécuté par un terminal, **caractérisé par** le fait de comprendre:
la réception (101) d'une première entrée pour déclencher l'affichage d'une page cible, dans laquelle la page cible comprend au moins deux cartes fonctionnelles, et chaque carte fonctionnelle affiche un message de notification ou une entrée de fonction rapide correspondant à un programme d'application; et
l'affichage (102), en réponse à la première entrée, des cartes fonctionnelles dans la page cible selon un mode d'affichage correspondant à un paramètre de fonctionnement de la première entrée, dans lequel le paramètre de fonctionnement de la première entrée est lié à un type de fonctionnement de la première entrée, des paramètres de fonctionnement différents correspondent à des modes d'affichage différents, et le mode d'affichage comprend au moins l'une des opérations suivantes:
afficher au moins une carte fonctionnelle dans la page cible;
afficher de manière dépliable la ou les cartes fonctionnelles dans la page cible, de sorte que le contenu de la ou des cartes fonctionnelles puisse être directement visualisé sans opération de dépliage;
afficher de manière pliable la ou les cartes fonctionnelles dans la page cible, de manière à ne pas afficher le contenu de la ou des cartes fonctionnelles..

2. Le procédé selon la revendication 1, dans lequel la première entrée comprend une première sous-entrée et une deuxième sous-entrée; et
l'affichage (102) des cartes fonctionnelles dans la page cible selon le mode d'affichage correspondant au paramètre de fonctionnement de la première entrée comprend:
l'affichage (302) d'une option de carte fonctionnelle (41) et/ou d'une option de groupe de cartes fonctionnelles (42) dans la page cible (40) dans une zone prédéfinie de l'écran d'un terminal, dans le cas où une durée d'entrée de la première sous-entrée dépasse une durée prédéfinie, ou
la détermination (303) d'une carte fonctionnelle cible ou d'un groupe de cartes fonctionnelles cible sélectionné par un utilisateur en fonction d'une position de point final de glissement de la deuxième sous-entrée dans la zone prédéfinie, dans le cas où il est détecté que la deuxième sous-entrée est un glissement vers la zone prédéfinie, et
l'affichage préférentiel (304) de la carte fonctionnelle cible ou du groupe de cartes fonctionnelles cible dans la page cible.

3. Le procédé selon la revendication 2, dans lequel l'affichage préférentiel de la carte fonctionnelle cible ou du groupe de cartes fonctionnelles cible dans la page cible comprend:
l'affichage de la carte fonctionnelle cible ou du groupe de cartes fonctionnelles cible en haut de la page cible; ou
le saut vers une position dans laquelle la carte fonctionnelle cible ou le groupe de cartes fonctionnelles cible est situé dans la page cible pour l'afficher.

4. Le procédé selon la revendication 1, dans lequel le paramètre de fonctionnement comprend des informations d'empreinte digitale; et
l'affichage (102) des cartes fonctionnelles dans la page cible selon le mode d'affichage correspondant au paramètre de fonctionnement de la première entrée comprend:
la collecte des informations d'empreinte digitale lorsqu'un utilisateur effectue la première entrée,
la détermination d'au moins une carte fonctionnelle correspondant aux informations d'empreinte digitale prédéfinies dans le cas où les informations d'empreinte digitale correspondent aux informations d'empreinte digitale prédéfinies, et
l'affichage de manière dépliable de la ou des cartes fonctionnelles dans la page cible.

5. Le procédé selon la revendication 4, dans lequel après la collecte des informations d'empreinte digitale lorsque l'utilisateur effectue la première entrée, le procédé comprend en outre:
l'affichage de manière pliable de la ou des cartes fonctionnelles dans la page cible dans le cas où les informations d'empreinte digitale ne correspondent pas aux informations d'empreinte digitale prédéfinies.

6. Le procédé selon la revendication 1, dans lequel le paramètre de fonctionnement comprend une zone de fonctionnement; et
l'affichage (102) des cartes fonctionnelles dans la page cible selon le mode d'affichage correspondant au paramètre de fonctionnement de la première entrée comprend:
la détermination d'une carte fonctionnelle ou d'un groupe de cartes fonctionnelles correspondant à la zone de fonctionnement en fonction de la zone de fonctionnement de la première entrée, et
l'affichage préférentiel de la carte fonctionnelle ou du groupe de cartes fonctionnelles correspondant à la zone de fonctionnement dans la page cible.

7. Le procédé selon l'une quelconque des revendications 1 à 6, dans lequel après l'affichage (102) de la carte fonctionnelle dans la page cible selon le mode d'affichage correspondant au paramètre de fonctionnement de la première entrée, le procédé comprend en outre:
l'affichage d'une marque d'application correspondante sur au moins une carte fonctionnelle dans la page cible; et
l'affichage d'une interface d'application rapide correspondant à une première carte fonctionnelle si une opération tactile visant la marque d'application sur la première carte fonctionnelle est détectée, dans lequel l'interface d'application rapide est une interface pour afficher le contenu détaillé correspondant aux cartes fonctionnelles sans démarrer un programme d'application, et la première carte fonctionnelle est l'une quelconque des cartes fonctionnelles.

8. Un terminal (500), **caractérisé par** le fait de comprendre:
un module de réception (501), configuré pour recevoir une première entrée pour déclencher l'affichage d'une page cible, dans lequel la page cible comprend au moins deux cartes fonctionnelles, et chaque carte fonctionnelle affiche un message de notification ou une entrée de fonction rapide correspondant à un programme d'application; et
un premier module d'affichage (502), configuré pour afficher, en réponse à la première entrée, les cartes fonctionnelles dans la page cible selon un mode d'affichage correspondant à un paramètre de fonctionnement de la première entrée, dans lequel le paramètre de fonctionnement de la première entrée est lié à un type de fonctionnement de la première entrée, des paramètres de fonctionnement différents correspondent à des modes d'affichage différents, et le mode d'affichage comprend au moins l'une des opérations suivantes:
afficher au moins une carte fonctionnelle dans la page cible;
afficher de manière dépliable la ou les cartes fonctionnelles dans la page cible, de sorte que le contenu de la ou des cartes fonctionnelles puisse être directement visualisé sans opération de dépliage;
afficher de manière pliable la ou les cartes fonctionnelles dans la page cible, de manière à ne pas afficher le contenu de la ou des cartes fonctionnelles..

9. Le terminal (500) selon la revendication 8, où la première entrée comprend une première sous-entrée et une deuxième sous-entrée; et
le premier module d'affichage (502) comprend:
un premier sous-module d'affichage (5021), configuré pour afficher une option de carte fonctionnelle (41) et/ou une option de groupe de cartes fonctionnelles (42) dans la page cible dans une zone prédéfinie (40) de l'écran d'un terminal, dans le cas où une durée d'entrée de la première sous-entrée dépasse une durée prédéfinie,
un premier sous-module de détermination (5022), configuré pour déterminer une carte fonctionnelle cible ou un groupe de cartes fonctionnelles cible sélectionné par un utilisateur en fonction d'une position de point final de glissement de la deuxième sous-entrée dans la zone prédéfinie dans le cas où il est détecté que la deuxième sous-entrée est un glissement vers la zone prédéfinie, et
un deuxième sous-module d'affichage (5023), configuré pour afficher préférentiellement la carte fonctionnelle cible ou le groupe de cartes fonctionnelles cible dans la page cible; ou
le paramètre de fonctionnement comprend des informations d'empreinte digitale; et le premier module d'affichage (502) comprend:
un sous-module d'acquisition (5024), configuré pour collecter les informations d'empreinte digitale lorsqu'un utilisateur effectue la première entrée,
un deuxième sous-module de détermination (5025), configuré pour déterminer au moins une carte fonctionnelle correspondant aux informations d'empreinte digitale prédéfinies dans le cas où les informations d'empreinte digitale correspondent aux informations d'empreinte digitale prédéfinies, et
un troisième sous-module d'affichage (5026), configuré pour afficher de manière dépliable la ou les cartes fonctionnelles dans la page cible.

10. Le terminal selon la revendication 9, où le deuxième sous-module d'affichage (5023) est configuré pour afficher la carte fonctionnelle cible ou le groupe de cartes fonctionnelles cible en haut de la page cible; ou
le deuxième sous-module d'affichage (5023) est configuré pour, sauter à une position où la carte fonctionnelle cible ou le groupe de cartes fonctionnelles cible est situé dans la page cible pour l'afficher.

11. Le terminal (500) selon la revendication 9, où le premier module d'affichage (502) comprend en outre:
un quatrième sous-module d'affichage (5027), configuré pour afficher de manière pliable la ou les cartes fonctionnelles dans la page cible dans le cas où les informations d'empreinte digitale ne correspondent pas aux informations d'empreinte digitale prédéfinies.

12. Le terminal (500) selon la revendication 8, dans lequel le paramètre de fonctionnement comprend une zone de fonctionnement; et le premier module d'affichage (502) comprend:
un troisième sous-module de détermination (5028), configuré pour déterminer une carte fonctionnelle ou un groupe de cartes fonctionnelles correspondant à la zone de fonctionnement en fonction de la zone de fonctionnement de la première entrée, et
un cinquième sous-module d'affichage (5029), configuré pour afficher préférentiellement la carte fonctionnelle ou le groupe de cartes fonctionnelles correspondant à la zone de fonctionnement dans la page cible.

13. Le terminal (500) selon l'une quelconque des revendications de 8 à 12, comprenant en outre:
un deuxième module d'affichage (503), configuré pour afficher une marque d'application correspondante sur au moins une carte fonctionnelle dans la page cible; et
un troisième module d'affichage (504), configuré pour afficher une interface d'application rapide correspondant à une première carte fonctionnelle si une opération tactile visant la marque d'application sur la première carte fonctionnelle est détectée, dans lequel l'interface d'application rapide est une interface pour afficher le contenu détaillé correspondant aux cartes fonctionnelles sans démarrer un programme d'application, et la première carte fonctionnelle est l'une quelconque des cartes fonctionnelles

14. Un support de stockage lisible par ordinateur, **caractérisé par** le fait de stocker un programme informatique, où lorsque le programme informatique est exécuté par un processeur (1110), les étapes du procédé d'affichage d'interface selon l'une quelconque des revendications de 1 à 7 sont mises en œuvre.
